# EUROPEAN PATENT SPECIFICATION

(11) **EP 4 073 574 B1**
(45) Date of publication and mention of the grant of the patent: **15.04.2026**
(21) Application number: 20899494.7
(22) Date of filing: 08.12.2020
(51) Int. Cl.: G02B 27/10, G02B 23/04, G02B 27/30, H01S 3/23, H01S 3/00, H01S 3/067, H01S 3/10

(54) **DEVICE WITH A HOLLOW OUTPUT BEAM**
VORRICHTUNG MIT EINEM HOHLEN AUSGANGSSTRAHL
DISPOSITIF À FAISCEAU DE SORTIE CREUX

(30) Priority: 09.12.2019 US 201962945692 P
(43) Date of publication of application: 19.10.2022
(73) Proprietor: Daylight Solutions Inc., San Diego, CA 92127 (US)
(72) Inventor: PUSHKARSKY, Michael, San Diego, CA 92130 (US); HAND, Carter, Saint Louis, MO 63108 (US)
(74) Representative: Viering, Jentschura & Partner mbB Patent- und Rechtsanwälte
(86) International application number: PCT/US2020/063810
(87) International publication number: WO 2021/119013

(56) References cited:
- EP-A1- 3 470 910
- CN-A- 108 287 412
- DE-A1- 102015 119 737
- US-A1- 2010 277 804
- US-A1- 2013 163 091
- US-A1- 2015 234 195
- US-A1- 2020 169 055

## Description

### BACKGROUND

High power laser assemblies are used in many applications, such as cutting lasers, welding lasers, and laser weaponry. Examples are disclosed in EP 3 470 910 A1 and CN 108 287 412 A, where coherent beams of different laser sources are combined to form a high power laser beam with a hollow center, which is further adjusted by an on-axis beam expander to provide an assembly beam that has a hollow center in the near field and characteristics of a solid beam in a far field.

An important requirement of high power laser assemblies is to maximize output power, while minimizing beam size in the far field and simultaneously at the laser aperture. Laws of electromagnetic propagation dictate that for a given laser aperture size, far-field spot size cannot be smaller than a certain value. Laser assemblies that achieve this smallest value are referred to as diffraction limited.

Output of high power laser assembly can require a complex beam director. Unfortunately, existing beam director assemblies have a relatively large form factor due to the requirement to expand and direct laser beam without creating beam obstruction.

### SUMMARY

The invention is set out in the appended set of claims. The present invention is directed to a laser that generates a combination beam, the laser including an optical amplifier array system that generates a plurality of laser beams having a same wavelength and approximately a same phase; and a beam combiner that coherently combines the plurality of laser beams to form a combination beam having a hollow center in a near field. As an overview, the coherently combined laser beams allow for a high power assembly beam that is near diffraction limited. Further, the combination beam with the hollow center allows for the use of an on-axis, reflective beam expander (e.g. an on-axis reflective telescope) without (i) loss in power, (ii) degradation of beam quality or (iii) excessive heating of the beam expander. Generally, on-axis reflective telescopes have a smaller form factor than off-axis reflective telescopes. Further, reflective elements in the telescope are required in high power applications. As provided herein, the unique hollow geometry of the combination beam allows for a more efficient, smaller form factor device.

Stated in another fashion, the proposed laser produces a near diffraction-limited, high power beam having a hollow center. This allows for the use of a simpler, lighter, and smaller beam director that points the beam, and includes an on-axis, reflective beam expander.

In one embodiment, at least two or more of the laser beams are replicas of each other, and/or at least two or more of laser beams propagate along parallel axes and are positioned side-by-side. Stated in another fashion, in one embodiment, at least two or more of the laser beams have the same wavelength and approximately the same phase. For example, each of the laser beams can have the same wavelength and approximately the same phase.

In certain implementations, the combination beam has a power of at least six kilowatts.

In one implementation, the optical amplifier array system can include a seed laser that generates a seed output beam, a fiber splitter that splits the seed output beam into a plurality of seed split beams, and an amplifier assembly that amplifies each of the seed split beams to generate the plurality of laser beams. With this design, each laser beam has a high power, and each laser beam is a replica of the other laser beams.

In one embodiment, the beam combiner directs the plurality of laser beams to be substantially parallel to and spaced apart from a combination axis of the combination beam.

**As** provided herein, in one embodiment, the beam combiner can include a plurality of combiner fibers for transmitting and launching the plurality of laser beams. Further, each combiner fiber can have a fiber outlet, and the fiber outlets can be spaced apart and arranged in an outlet pattern having a hollow center.

The beam combiner can coherently combine the plurality of laser beams so that the combination beam has a substantially annular shaped cross-section with a substantially circular outer diameter and a substantially circular inner diameter.

The present invention is also directed to a system including the laser that generates the combination beam, and a beam director that points and expands the combination beam to provide an assembly beam having a hollow center in the near field and characteristics of a solid beam in a far field. In this design, the beam director includes a beam pointer downstream from the laser that points the combination beam that exits the laser, and a beam expander that expands the combination beam. The beam expander is an on-axis beam expander that include a plurality of reflective elements that expand the combination beam. In one implementation, the beam expander includes a diverging element and a collimating element.

In another implementation, the present invention is directed to a method for generating a combination beam. The method includes generating a plurality of laser beams; and coherently combining the plurality of laser beams to form a combination beam having a hollow center in a near field region.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1A is simplified side illustration of one implementation of a device that includes a laser;
Figure 1B is a simplified cross-sectional illustration of a combination beam and a plurality of cross-sectional illustrations of an assembly beam at different locations;
Figure 2A is a more detailed illustration of the device;
Figure 2B is a simplified illustration of one implementation of the laser of Figure 2A;
Figure 2C is simplified illustration of a fiber outlet pattern of the laser for a simple case of a hollow beam pattern of six beams;
Figure 2D is a simplified end illustration of the combination beam generated by the laser for the simple case of the hollow beam pattern of six beams;
Figure 2E is a simplified illustration of a beam director of Figure 2A;
Figure 2F is simplified illustration of the beam expander of Figure 2E;
Figure 2G is a simplified end illustration of a clear aperture of an assembly beam generated by the device in a near field;
Figure 2H is a simplified end illustration of the assembly beam generated by the device in a far field;
Figure 3 is a simplified end illustration of another combination beam; and
Figure 4 is a simplified end illustration of still another combination beam that is designed to avoid support frames in a beam expander.

### DESCRIPTION

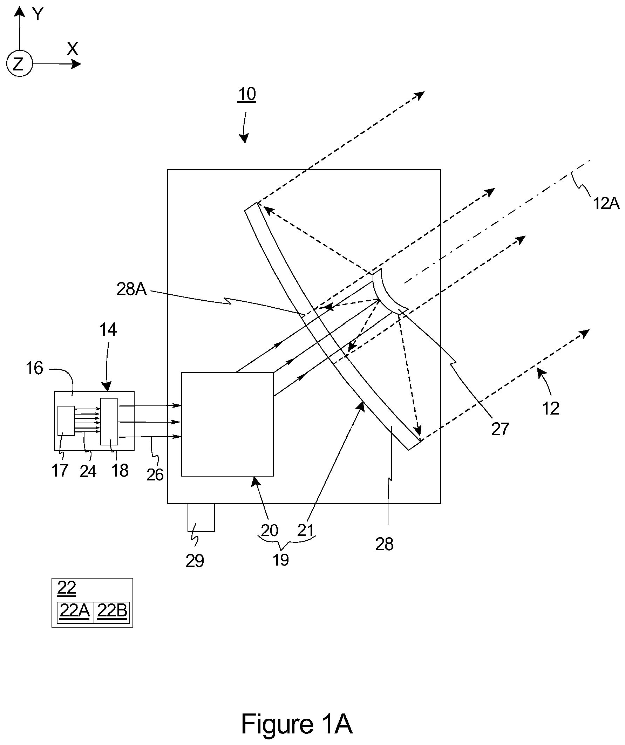

Figure 1A is simplified top schematic illustration of an implementation of a device 10 that generates an assembly beam 12 (illustrated with dashed lines) along an output axis 12A. In this non-exclusive implementation, the device 10 includes (i) a laser assembly 14 (sometimes referred to as a "laser") including a mounting base 16, an optical amplifier array system 17 (illustrated as a box in Figure 1A), and a beam combiner 18 (illustrated as a box in Figure 1A); (ii) a beam director 19 including a beam pointer 20, and a beam expander 21; and (iii) a system controller 22. The design, size, position and/or shape of these components can be varied pursuant to the teachings provided herein. Further, the device 10 can be designed with more or fewer components than illustrated in Figure 1A, and/or the arrangement of these components can be different than that illustrated in Figure 1A. For example, the beam director 19 can be optional.

A number of Figures include an orientation system that illustrates an X axis, a Y axis that is orthogonal to the X axis, and a Z axis that is orthogonal to the X and Y axes. It should be noted that these axes can also be referred to as the first, second, and third axes.

As an overview, in certain embodiments, the optical amplifier array system 17 generates a plurality of amplified laser beams 24 (illustrated with arrows), and the beam combiner 18 coherently combines the laser beams 24 to form a hollow, combination beam 26. Next, the beam pointer 20 steers and directs the hollow combination beam 26 to the beam expander 21. Subsequently, the beam expander 21 expands the combination beam 26 to generate the assembly beam 12 that has a hollow center in a near field, and near diffraction limited beam in a far field.

As used herein, the term "near field" shall mean the region around the output aperture of the beam expander 21, and the term "far field" shall mean the region located many Rayleigh ranges away from the beam expander 21.

As provided herein, the coherently combined individual laser beams 24 allow for a high power beams 12, 26 that are near diffraction limited. As non-exclusive examples, the laser assembly 14 can be designed so that the power output of the beams 12, 26 is greater than ten, fifty, one hundred, three hundred, five hundred, or one thousand Kilowatts.

Further, the multiple laser beams 24 are arranged so that the combination beam 26 has the hollow center. Importantly, the hollow center allows for the beam expander 21 to be an on-axis reflective telescope while using the entire combination beam 26; and without (i) loss in power, (ii) degradation of quality of the assembly beam 12, and/or (iii) excessive heating of the beam expander 21. Generally, on-axis reflective telescopes 21 have a smaller form factor than off-axis reflective telescopes (not shown). Further, reflective elements in the telescope 21 are required in high power applications. Thus, the unique hollow geometry of the combination beam 26 allows for a more efficient, and smaller form factor, high-powered device 10.

The high powered device 10 disclosed herein can be used in a number of different applications. As non-exclusive examples, the device 10 can be used for industrial cutting, welding, or laser weaponry.

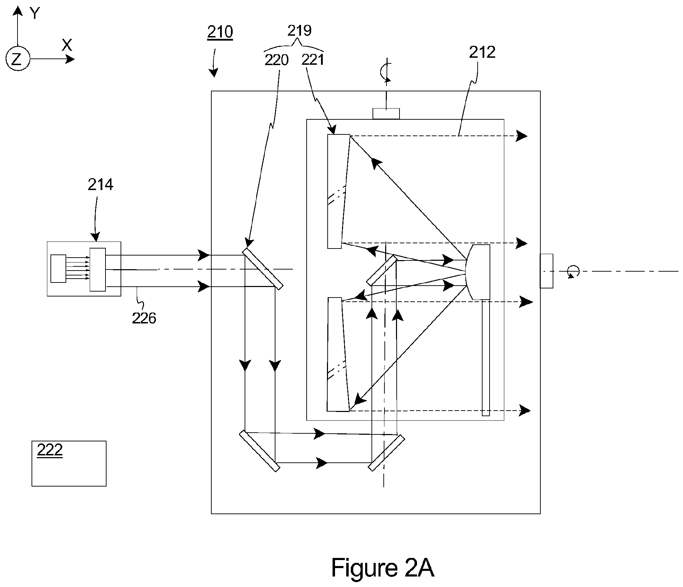

The beam pointer 20 directs and steers the combination beam 26 from the beam combiner 18 to the beam expander 21. For example, the beam pointer 20 can include one or more reflective elements (not shown in Figure 1A) that cooperate to direct and steer the combination beam 26 from the beam combiner 18 to the beam expander 21. In Figure 1A, the beam pointer 20 is illustrated as a box, and the combination beam 26 is illustrated as being directed through one element of the beam expander 21. However, typically, the beam pointer 20 can be designed to direct the combination beam 26 from the side between the elements of the beam expander 21 to allow for movement of the beam expander 21 while steering the assembly beam 12. A simplified, non-exclusive example of a more typical suitable beam pointer 20 is illustrated in Figure 2A, and described below.

The beam expander 21 adjusts and expands the combination beam 26 to provide the assembly beam 12 that has a hollow center in the near field and no hollow center in the far field. In the simplified embodiment illustrated in Figure 1A, the beam expander 21 is an on-axis reflective telescope that includes (i) a diverging element 27, and (ii) a collimating element 28 that includes an element aperture 28A (illustrated with dashed lines). In this simplified implementation, the beam pointer 20 is designed to direct the combination beam 26 through the element aperture 28A of the collimating element 28 at the diverging element 27. Next, the combination beam 26 is reflected off of the diverging element 27 to the collimating element 28. Subsequently, the combination beam 26 is reflected off of the collimating element 28 as the assembly beam 12 along the output axis 12A.

It should be noted that in designs in which the beam pointer 20 does not direct the combination beam 26 through the collimating element 28, that the collimating element 28 can be designed without the element aperture 28A.

Additionally, the beam director 19 can include a beam mover assembly 29 (illustrated as a box) that is controlled to move one or more elements of the beam pointer 20 and the elements 27, 28 of the beam expander 21 to selectively direct (steer) the assembly beam 12. Stated in another fashion, the beam mover assembly 29 can be used to steer the assembly beam 12 and the output axis 12A. Moreover, the beam director 19 can include one or more structural frames (not shown in Figure 1A) for coupling one or more of the components together.

With the present design, the device 10 generates and steers the assembly beam 12. As non-exclusive examples, the device 10 can be a cutting system, a welding system, or a laser weapon.

The system controller 22 controls the operation of the various components of the device 10. For example, the system controller 22 can be electrically connected to and control the components of optical amplifier array system 17, and the beam mover assembly 29. The system controller 22 can include one or more processors 22A and/or one or more electronic data storage devices 22B. The system controller 22 is illustrated in Figure 1A as a centralized system. Alternatively, the system controller 22 can be a distributed system.

The device 10 can be powered by a generator, a battery, or another power source.

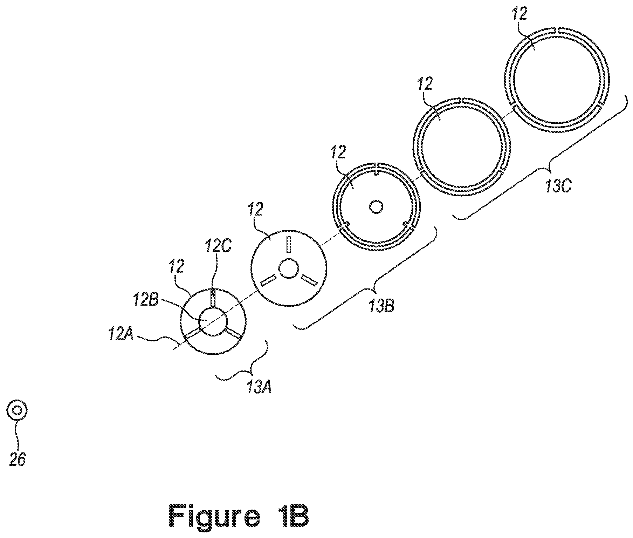

Figure 1B is a simplified cross-sectional illustration of the combination beam 26, and a plurality of cross-sectional illustrations of the assembly beam 12 at five different locations as the assembly beam 12 propagates along the output axis 12A. In this simplified example, the laser 14 (illustrated in Figure 1A) is uniquely designed so that the combination beam 26 is essentially a laser beam with a hole in the center.

Further, the assembly beam 12 is illustrated at five different locations, including a near field 13A, a transition range 13B, and a far field 13C along the output axis 12A. In this example, the assembly beam 12 has an annular shape in the near field 13A, and transitions to a near diffraction limited, solid beam 12 in the far field. Thus, Figure 1B illustrates how the assembly beam 12 transitions as it travels away from the beam director 19 (illustrated in Figure 1A) along the output axis 12A.

It should be noted that in the non-exclusive implementation of Figure 1B, the assembly beam 12 has a hollow center 12B in the near field 13A and in transition range 13B due to the annular shape of the combination beam 26. Further, the assembly beam 12 can include one or more (e.g. three) slots 12C in the near field 13A and in transition range 13B, which result from the combination beam 26 and/or the assembly beam 12 being partly obstructed. For example, one or more structural frames (not shown in Figure 1B) can be used to retain one or more of the elements in the beam director 19 (illustrated in Figure 1A). These structural frames can obstruct portions of the combination beam 26 and/or the assembly beam 12 to create the slots in the assembly beam 12 in the near field 13A and in transition range 13B. For example, three spaced apart radial, structural frames can create three spaced apart radial slots 12C in the assembly beam 12 in the near field 13A and in transition range 13B.

Figure 2A is a more detailed, simplified illustration of another implementation of the device 210 that generates the assembly beam 212. More specifically, Figure 2A illustrates (i) the laser 214 that generates the combination beam 226; (ii) the beam director 219 including the beam pointer 220 and the beam expander 221 (partly illustrated in cutaway) that point and expand the combination beam 226 to provide the assembly beam 212; and (iii) the control system 222 that are similar to the corresponding components described above. However, the beam director 219 is illustrated in more detail in Figure 2A.

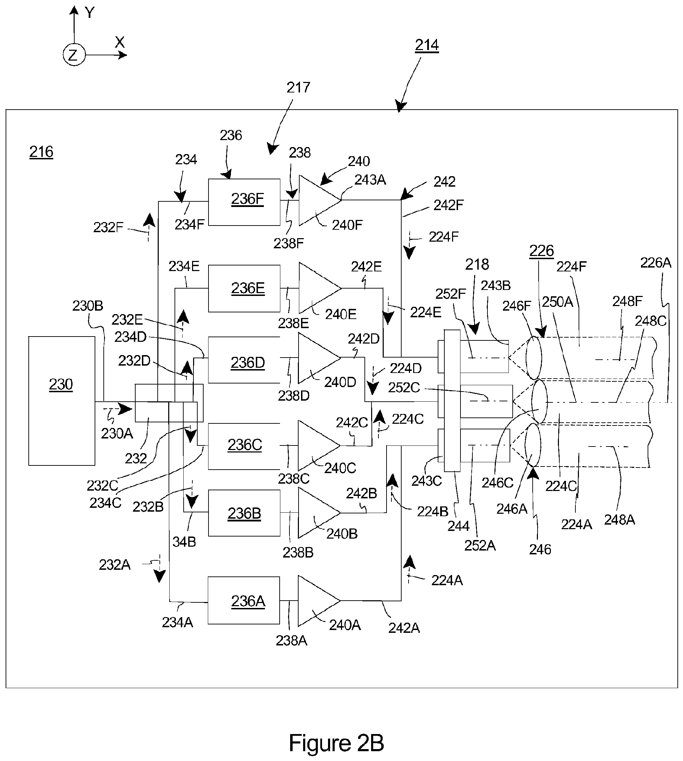

Figure 2B is a more detailed top illustration of the laser assembly 214 including the mounting base 216, the optical amplifier array system 217, and the beam combiner 218. In this embodiment, the mounting base 216 provides a rigid platform for supporting the optical amplifier array system 217 and the beam combiner 218, and maintains the relative position of these components. Additionally, the mounting base 216 can include a temperature controller (not shown) for controlling the temperature of the mounting base 216. Non-exclusive examples of suitable materials for the mounting base 216 include magnesium, aluminum, and carbon fiber composite.

The optical amplifier array system 217 outputs a plurality of fiber coupled, amplified optical outputs 224A-224F (Illustrated with dashed arrows) that are terminated into free space, amplified, laser beams that are coherently combined by the beam combiner 218. The design of the optical amplifier array system 217 can be varied to achieve the design parameters of the optical amplifier array system 217. In the non-exclusive embodiment illustrated in Figure 2B, the optical amplifier array system 217 includes a seed laser 230, a fiber splitter 232, a splitter fiber array 234, a phase controller 236, an intermediate fiber array 238, and a fiber amplifier assembly 240 that cooperate to generate the plurality of fiber coupled optical outputs 224A-224F. Alternatively, the optical amplifier array system 217 can be designed with more or fewer components than illustrated in Figure 2B.

The seed laser 230 is designed to emit a stable, single wavelength, seed output beam 230A (illustrated with a dashed arrow) at the desired wavelength of the assembly beam 212. As a non-exclusive example, the seed laser 230 can emit at a single wavelength in the 1060 to 1080 nanometer range (e.g. at 1064 nanometers).

In certain embodiments, the seed laser 230 can have a relatively low power. As non-exclusive examples, the seed output beam 230A can have a power of less than one, five, ten, or fifty milliwatts. However, other powers are possible. Moreover, as non-exclusive examples, the gain medium can be a semiconductor, a fiber laser, or a solid state laser. The seed laser 230 can include an optical, seed fiber 230B that transmits the emitting seed output beam 230A.

The fiber splitter 232 splits the seed output beam 230A into a plurality of seed split beams 232A-232F (illustrated with dashed arrows) that each have a common wavelength. In simplified example illustrated in Figure 2B, the fiber splitter 232 splits the seed output beam 230A into six, separate seed split beams 232A-232F, that are referenced as (i) a first seed split beam 232A, (ii) a second seed split beam 232B, (iii) a third seed split beam 232C, (iv) a fourth seed split beam 232D, (v) a fifth seed split beam 232E, and (vi) a sixth seed split beam 232F for ease of discussion.

Alternatively, the fiber splitter 232 can be design to split the seed output beam 230A into more than six, or fewer than six, separate seed split beams 232A-232F. As alternative, non-exclusive examples, the fiber splitter 232 can be designed to split the seed output beam 230A into at least four, ten, thirty, fifty, one hundred, or two hundred separate seed split beams 232A-232F. Generally speaking, the power output of the assembly beam 212 (illustrated in Figure 2A) increases as the number of separate seed split beams 232A-232F increases. Thus, the device 210 provided herein is easily scalable by adjusting the number of seed split beams 232A-232F.

In the embodiment illustrated in Figure 2B, the splitter fiber array 234 includes a plurality of optical splitter fibers 34A-34F for individually transmitting the seed split beams 232A-232F from the fiber splitter 232 to the phase controller 236. Thus, the number of individual splitter fibers 234A-234F will correspond to the number of seed split beams 232A-234F. In the non-exclusive embodiment illustrated in Figure 2A, the splitter fiber array 234 includes six, separate optical, splitter fibers 234A-234F, including (i) a first splitter fiber 234A that transmits the first seed split beam 232A from the fiber splitter 232 to a first phase control module 236A of the phase controller 236, (ii) a second splitter fiber 234B that transmits the second seed split beam 232B from the fiber splitter 232 to a second phase control module 236B of the phase controller 236, (iii) a third splitter fiber 234C that transmits the third seed split beam 232C from the fiber splitter 232 to a third phase control module 236C of the phase controller 236, (iv) a fourth splitter fiber 234D that transmits the fourth seed split beam 232D from the fiber splitter 232 to a fourth phase control module 236D of the phase controller 236, (v) a fifth splitter fiber 234E that transmits the fifth seed split beam 232E from the fiber splitter 232 to a fifth phase control module 236E of the phase controller 236, and (vi) a sixth splitter fiber 234F that transmits the sixth seed split beam 232F from the fiber splitter 232 to a sixth phase control module 236F of the phase controller 236.

The phase controller 236 includes the plurality of individual phase control modules 236A-236F for individually modulating the phase of each seed split beam 232A-232F so that phase of all the laser beams 224A-224F is coherent (phase of each laser beam 224A-224F is approximately the same). Thus, the number of individual phase control modules 236A-236F will correspond to the number of seed split beams 232A-234F. In the non-exclusive embodiment illustrated in Figure 2B, the phase controller 236 includes six, separate phase control modules 236A-236F, including (i) the first phase control module 236A that modulates the phase of the first seed split beam 232A, (ii) the second phase control module 236B that modulates the phase of the second seed split beam 232B, (iii) the third phase control module 236C that modulates the phase of the third seed split beam 232C, (iv) the fourth phase control module 236D that modulates the phase of the fourth seed split beam 232D, (v) the fifth phase control module 236E that modulates the phase of the fifth seed split beam 232E, and (vi) the sixth phase control module 236F that modulates the phase of the sixth seed split beam 232F.

In Figure 2B, the intermediate fiber array 238 includes a plurality of intermediate fibers 238A-238F for individually transmitting the seed split beams 232A-232F from the phase controller 236 to the amplifier assembly 240. Thus, the number of individual intermediate fibers 238A-238F will correspond to the number of seed split beams 232A-234F. In Figure 2B, the intermediate fiber array 238 includes six, separate optical, intermediate fibers 238A-238F, including (i) a first intermediate fiber 238A that transmits the first seed split beam 232A from the first phase control module 236A to a first fiber amplifier 240A of the amplifier assembly 240, (ii) a second intermediate fiber 238B that transmits the second seed split beam 232B from the second phase control module 236B to a second fiber amplifier 240B of the amplifier assembly 240, (iii) a third intermediate fiber 238C that transmits the third seed split beam 232C from the third phase control module 236C to a third fiber amplifier 240C of the amplifier assembly 240, (iv) a fourth intermediate fiber 238D that transmits the fourth seed split beam 232D from the fourth phase control module 236D to a fourth fiber amplifier 240D of the amplifier assembly 240, (v) a fifth intermediate fiber 238E that transmits the fifth seed split beam 232E from the fifth phase control module 236E to a fifth fiber amplifier 240E of the amplifier assembly 240, and (vi) a sixth intermediate fiber 238F that transmits the sixth seed split beam 232F from the sixth phase control module 236F to a sixth fiber amplifier 240F of the amplifier assembly 240.

The amplifier assembly 240 individually amplifies each of the seed split beams 232A-232F to generate the plurality of laser beams 224. More specifically, the amplifier assembly 240 includes the plurality of individual fiber amplifiers 240A-240F for individually amplifying each seed split beam 232A-232F. Thus, the number of individual fiber amplifiers 240A-240F will correspond to the number of seed split beams 232A-234F. In Figure 1A, the amplifier assembly 240 includes six, separate fiber amplifiers 240A-240F, including (i) the first fiber amplifier 240A that amplifies the first seed split beam 232A to generate a first laser beam 224A (illustrated with a dashed line), (ii) the second fiber amplifier 240B that amplifies the second seed split beam 232B to generate a second laser beam 224B (illustrated with a dashed line), (iii) the third fiber amplifier 240C that amplifies the third seed split beam 232C to generate a third laser beam 224C (illustrated with a dashed line), (iv) the fourth fiber amplifier 240D that amplifies the fourth seed split beam 232D to generate a fourth laser beam 224D (illustrated with a dashed line), (v) the fifth fiber amplifier 240E that amplifies the fifth seed split beam 232E to generate a fifth laser beam 224E (illustrated with a dashed line), and (vi) the sixth fiber amplifier 240A that amplifies the sixth seed split beam 232F to generate a sixth laser beam 224F (illustrated with a dashed line).

Each fiber amplifier 240A-240F can be an optical amplifier that amplifies the respective seed split beam 232A-232F directly. Each fiber amplifier 240A-240F can be designed and selected based on the desired wavelength and power of the assembly beam 212. In alternative, non-exclusive examples, each fiber amplifier 240A-240F can amplify the respective seed split beam 232A-232F at least 10², 10³, 10⁴, *or* 10⁵ times. Further, as alternative, non-exclusive examples, each fiber amplifier 240A-240F can amplify the respective seed split beam 232A2-32F so that each laser beam 224A-224F has an output power of at least 0.5, 1.5, 3, or 5 kilowatts.

With the present design, the optical amplifier array system 217 generates the plurality of laser beams 224A-224F having the same wavelength and having relative phases actively controlled by the phase controller 236 for highest beam quality in the combination beam 226. Stated in another fashion, the each of the plurality of laser beams 224A-224F will have the same wavelength and approximately the same phase using the phase controller 236. In alternative, non-exclusive examples, as used herein, the term "approximately the same phase" shall mean that the difference in phase between the plurality of laser beams 224A-224F is less than 0.05, 0.1, 0.15, or 0.2 Radians RMS.

It should be noted that the system controller 222 can control the seed laser 230, the fiber splitter 232, the phase control modules 236A-236F, and the fiber amplifiers 240A-240F to achieve the desired laser beams 224A-224F.

The beam combiner 218 collimates and spatially combines the plurality of laser beams 224A-224F exiting the fiber array 242 to create the uniquely shaped combination beam 226. With this design, the use of coherently combined laser beams 224A-224F (i) allows for the scaling of laser power by adding or removing laser beams 224A-224F, and (ii) allows for the intentional shaping of the near-field intensity distribution of the combination beam 226 to suit the design of the beam expander 221.

The design of the beam combiner 218 can be varied pursuant to the teachings provided herein. In the non-exclusive embodiment illustrated in Figure 2B, the beam combiner 218 includes a combiner fiber array 242, a combiner frame assembly 244, and a combiner lens assembly 246 that cooperate to launch the laser beams 224A-224F to form the combination beam 226.

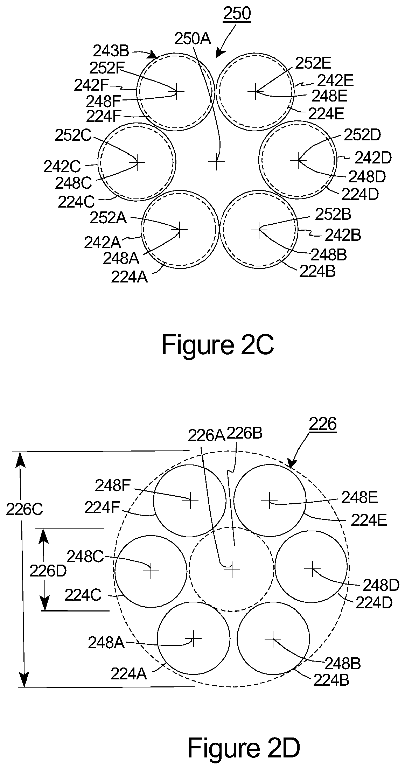

The combiner fiber array 242 includes a plurality of combiner fibers 242A-242F for individually transmitting and launching the laser beams 224A-224F from the amplifier assembly 240. Thus, the number of individual combiner fibers 242A-242F will correspond to the number of laser beams 224A-224F. In Figure 2B, the combiner fiber array 242 includes six, separate optical, combiner fibers 242A-242F, including (i) a first combiner fiber 242A that transmits the first laser beam 224A from the first fiber amplifier 240A, and launches the first laser beam 224A along a first beam axis 248A; (ii) a second combiner fiber 242B that transmits the second laser beam 224B from the second fiber amplifier 240B, and launches the second laser beam 224B along a second beam axis 248B (illustrated in Figure 2D); (iii) a third combiner fiber 242C that transmits the third laser beam 224C from the third fiber amplifier 240C, and launches the third laser beam 224C along a third beam axis 248C; (iv) a fourth combiner fiber 242D that transmits the fourth laser beam 224D from the fourth fiber amplifier 240D, and launches the fourth laser beam 224D along a fourth beam axis 248D (illustrated in Figure 2D); (v) a fifth combiner fiber 242E that transmits the fifth laser beam 224E from the fifth fiber amplifier 240E, and launches the fifth laser beam 224E along a fifth beam axis 248E (illustrated in Figure 2D); and (vi) a sixth combiner fiber 242F that transmits the sixth laser beam 224F from the sixth fiber amplifier 240F, and launches the sixth laser beam 224F along a sixth beam axis 248F.

In the non-exclusive embodiment illustrated in Figure 2B and 2D, (i) the beam axes 248A-248F are each parallel to and spaced apart from a combination axis 226A of the combination beam 226; and (iii) the beam axes 248A-248F are spaced apart from each other in a circular pattern, and the beam axes 248A-248F are parallel to each other and the combination axis 226A.

In one embodiment, each combiner fiber 242A-242F includes a fiber inlet 243A that is connected to the respective fiber amplifier 240A-240F, and a fiber outlet 243B that directs the respective laser beam 224A-224F along the desired axis 248A-248F. In one non-exclusive embodiment, each fiber outlet 243B can include a separate end cap 243C that protects the output facet.

The combiner frame assembly 244 retains the individual combiner fibers 242A-242F near the distal end 243B to hold the distal ends 243B so that the individual laser beams 224A-224F are launched and directed along the desired paths. For example, the combiner frame assembly 244 can be a rigid frame secured to the mounting base 216 that maintains the desired positions of the fiber outlets 243B. Thus, the design of the combiner frame assembly 224 can be varied to achieve the desired positions of the fiber outlets 243B to achieve the desired design of the combination beam 226.

Figure 2C is simplified end illustration of the fiber outlets 243B of the six combiner fibers 242A-242F that are arranged and maintained in a first outlet pattern 250 and the respective laser beams 224A-224F illustrated with dashed circles. With reference to Figures 2B and 2C, (i) the fiber outlet 243B of the first combiner fiber 242A is centered on a first outlet axis 252A, and the first combiner fiber 242A launches the first laser beam 224A into free space along the first beam axis 248A that is coaxial with the first outlet axis 252A; (ii) the fiber outlet 243B of the second combiner fiber 242B is centered on a second outlet axis 252B, and the second combiner fiber 242B launches the second laser beam 224B into free space along the second beam axis 248B that is coaxial with the second outlet axis 252B; (iii) the fiber outlet 243B of the third combiner fiber 242C is centered on a third outlet axis 252C, and the third combiner fiber 242C launches the third laser beam 224C into free space along the third beam axis 248C that is coaxial with the third outlet axis 252C; (iv) the fiber outlet 243B of the fourth combiner fiber 242D is centered on a fourth outlet axis 252D, and the fourth combiner fiber 242D launches the fourth laser beam 224D into free space along the fourth beam axis 248D that is coaxial with the fourth outlet axis 252D; (v) the fiber outlet 243B of the fifth combiner fiber 242E is centered on a fifth outlet axis 252E, and the fifth combiner fiber 242E launches the fifth laser beam 224E into free space along the fifth beam axis 248E that is coaxial with the fifth outlet axis 252E; (vi) the fiber outlet 243B of the sixth combiner fiber 242F is centered on a sixth outlet axis 252F, and the sixth combiner fiber 242F launches the sixth laser beam 224F into free space along the sixth beam axis 248F that is coaxial with the sixth outlet axis 252F.

In this embodiment, the first outlet pattern 250 is centered about a pattern axis 250A, and the outlet axes 252A-252F are parallel to and equally spaced apart from the pattern axis 250A. Further, the outlet axes 252A-252F are spaced apart from the pattern axis 250A and are distributed about the pattern axis 250A. With this design, the fiber outlets 243B are spaced apart and arranged in an annular pattern (with a hollow center) that is centered about the pattern axis 250A.

In the non-exclusive embodiment illustrated in Figures 2B and 2C, (i) the pattern axis 250A is coaxial with the combination axis 226A of the combination beam 226; (ii) the outlet axes 252A-252F are each parallel to and spaced apart from the pattern axis 250A; and (iii) the outlet axes 252A-252F are spaced apart from each other and parallel to each other.

Referring back to Figure 2B, the combiner lens assembly 246 collimates the laser beams 224A-224F launched into free space from the combiner fibers 242A-242F. In one embodiment, the combiner lens assembly 246 includes an array of lenses 246A, 246C, 246F (only three are visible in Figure 2B) for individually collimating the laser beams 224A-224F. Thus, the number of individual lenses 242A, 246C, 242F will correspond to the number of laser beams 224A-224F. In the non-exclusive embodiment illustrated in Figure 2B, the combiner lens assembly 246 includes six, separate lenses 246A, 246C, 246F, including (i) a first lens 246A that collimates the launched first laser beam 224A; (ii) a second lens (not shown) that collimates the second launched laser beam 224B; (iii) a third lens 246C that collimates the launched third laser beam 224C; (iv) a fourth lens (not shown) that collimates the launched fourth laser beam 224D; (v) a fifth lens (not shown) that collimates the launched fifth laser beam 224E; and (vi) a sixth lens 246F that collimates the launched sixth laser beam 224F.

In one embodiment, each lens 242A, 246C, 242F can be a spherical lens having an optical axis that is aligned with the respective beam axis 248A-248F. In alternative, non-exclusive embodiments, each lens 242A, 246C, 242F can have a diameter of less than approximately one, two, three, four, five or ten millimeters. The type of material utilized for each lens 242A, 246C, 242F can be selected to work with the wavelength of the laser beams 224A-224F. Each lens 242A, 246C, 242F may be spherical or aspherical. In one embodiment, each lens 242A, 246C, 242F is secured to the mounting base 216.

In a non-exclusive embodiment, a Numerical Aperture of each lens 242A, 246C, 242F is chosen to approximately match a Numerical Aperture of its respective laser beam 224A-224F. Stated in another fashion, each lens 242A, 246C, 242F is designed to have an acceptance angle that approximately matches a cone of its respective laser beam 224A-224F. This results in the most compact system, and has the further advantage of maximizing the beam size relative to the lens diameter.

Figure 2D is a simplified end illustration of the combination beam 226 generated by the coherently combined laser beams 224A-224F (illustrated with circles) in the near field. In this embodiment, (i) the laser beams 224A-224F are directed and propagate parallel to each other (e.g. travel along parallel axes 248A-248F), (ii) the laser beams 224A-224F are adjacent (side-by-side) to each other, and (iii) the laser beams 224A-224F spaced apart from and distributed around the combination axis 226A.

Further, the laser beams 224A-224F are arranged so that the combination beam 226 has a substantially annular shaped cross-section (illustrated with dashed lines) in the near field and has a hollow center 226B. In this embodiment, combination beam 226 has a substantially circular outer diameter 226C and a substantially circular inner diameter 226D.

As used herein, "substantially annular" shall mean that at least seventy-five percent of an annular shape is filled with light. Further, as used herein, "substantially circular outer diameter" shall mean that a circle (illustrated with dashes) can be made that tightly surrounds and encircles the combined light beams 224A-224F. Moreover, as used herein, "substantially circular inner diameter" shall mean that a circle (illustrated with dashes) can be made that is tightly surrounded and encircled by the combined light beams 224A-224F.

It should be noted that the combination beam 226 can be designed so that the diameters 226C, 226D of the combination beam 226 correspond to the design of the beam director 219 (illustrated in Figure 2A). In a non-exclusive implementation, the laser assembly 214 (illustrated in 2B) is designed so that (i) the combination outer diameter 226C of the combination beam 226 is between one to four inches, and (ii) the combination inner diameter 226D of the combination beam 226 is between 0.3 to one inches. In alternative, non-exclusive examples, the combination inner diameter 226D is at least approximately fifteen, twenty, twenty-five, thirty, forty, fifty, sixty, seventy, seventy-five, or eighty percent of the combination outer diameter 226C.

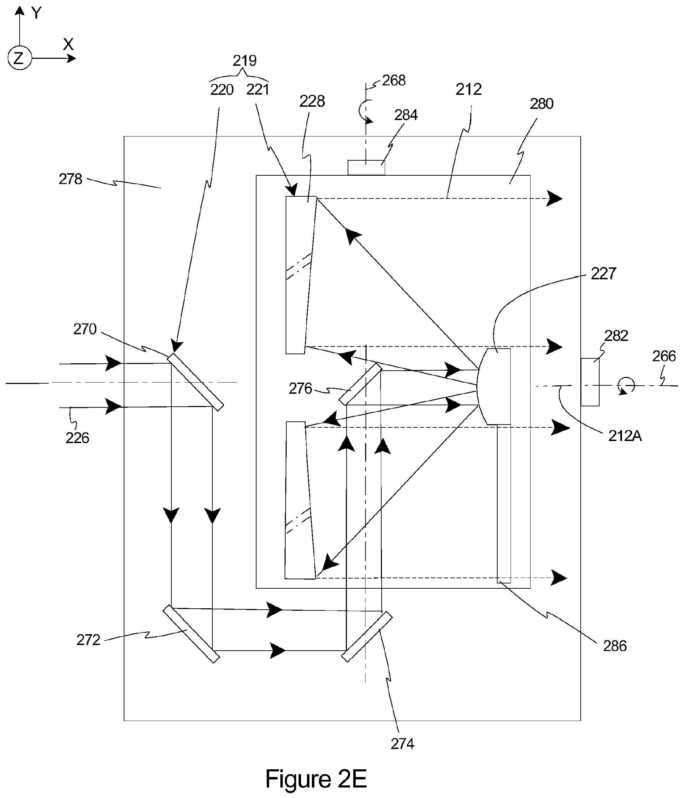

Figure 2E is a simplified illustration of the beam director 219 including the beam pointer 220 and the beam expander 221 (in partial cut-away) of Figure 2A. In this non-exclusive implementation, the beam pointer 220 is controlled to point the assembly beam 212. Further, the beam pointer 220 directs the combination beam 226 from the side between the expander elements 227, 228 of the beam expander 221. This arrangement allows for the concurrent movement of the expander elements 227, 228 of the beam expander 221 about a first axis 466 (e.g. about the X axis) and about a second axis 468 (e.g. about the Y axis) during steering of the assembly beam 412.

In Figure 2E, the beam pointer 220 includes a first pointer element 270, a second pointer element 272, a third pointer element 274, a fourth pointer element 276, a first pointer frame 278, a second pointer frame 780, a first frame mover 282 (illustrated as a box), and a second frame mover 284 (illustrated as a box) that cooperate to point the assembly beam 212. The design of each of these components can be varied pursuant to the teachings provided herein.

The pointer elements 270, 272, 274, 276 are reflective elements that are spaced apart and arranged in a rectangular pattern. In this embodiment, (i) the first pointer element 270 redirects the combination beam 226 ninety degrees at the second pointer element 272; (ii) the second pointer element 272 redirects the combination beam 226 ninety degrees at the third pointer element 274; (iii) the third pointer element 274 redirects the combination beam 226 ninety degrees at the fourth pointer element 276; and (iv) the fourth pointer element 276 is positioned between the diverging element 227 and the collimating element 228 of the beam expander 221, and the fourth pointer element 276 redirects the combination beam 226 ninety degrees at the diverging element 227.

In this implementation, the expander elements 227, 228 of the beam expander 221 and the fourth pointer element 276 are coupled to and move with the second pointer frame 280. Further, the expander elements 227, 228, the fourth pointer element 276 and the second pointer frame 280 function as a second axis module that is rotated by the second frame mover 284 about the second axis 268. Moreover, the first pointer element 270, the second pointer element 272, the third pointer element 274, and the second axis module are coupled to and move with the first pointer frame 278. Additionally, the pointer elements 270, 272, 274, the second axis module, and the first pointer frame 278 function as a first axis module that is rotated by the first frame mover 282 about the first axis 266.

Stated in another fashion, in this design, (i) the first frame mover 282 is controlled to selectively rotate the first pointer frame 278 along with the pointer elements 270, 272, 274, 276, the second pointer frame 280, the second frame mover 284, and the beam expander 221 relative to the laser 214 (illustrated in Figure 2A) about the first axis 266 to selectively adjust the azimuth angle of the output axis 212A of the assembly beam 212; and (ii) the second frame mover 284 is controlled to selectively rotate the second pointer frame 280 along with the fourth pointer element 276, and the beam expander 221 relative to the first pointer frame 280 about the second axis 268 to selectively adjust the elevation angle of the output axis 212A of the assembly beam 212. With this design, the frame movers 282, 284 can be controlled by the system controller 222 (illustrated in Figure 2A) to selectively and accurately point the assembly beam 212. For example, each frame mover 282, 284 can be a rotary motor or another type of actuator.

In this design, each of the pointer elements 270, 272, 274, 276 can be a reflective element that is appropriately coated to reflect light in the wavelengths of the combination beam 226.

In Figure 2E, the pointer frames 278, 280 are illustrated as being rectangular shaped. However, the pointer frames 278, 280 will likely have a much different configuration. For example, each of the pointer frames 278, 280 can be a gimbal assembly.

Further, it should be noted that one or more of the pointer frames 278, 280 can include one or more rigid structural frames 286 (only one is shown as a box) that couple one or more elements 227, 228, 270, 272, 274, 276 together. For example, one or more structural frames 286 can (i) couple the elements 227, 228 of the beam expander 221 together and/or to the second pointer frame 280; and/or (ii) couple the pointer elements 270, 272, 274, 276 together or to the respective frames 278, 280. Unfortunately, these structural frames 286 can partly block/obstruct the combination beam 226 and/or the assembly beam 212.

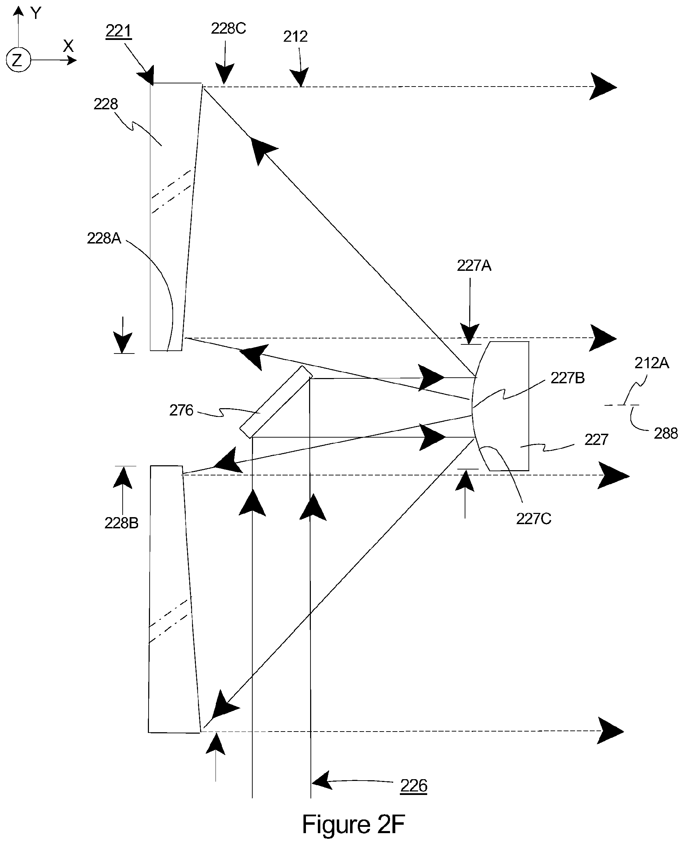

Figure 2F is simplified illustration of the beam expander 221 and the fourth pointer element 276 of Figure 2E. As provided above, the beam expander 221 adjusts the combination beam 226 to provide the assembly beam 212 that has a hollow center in the near field and no hollow center in the far field. It should be noted that the collimating element 228 is illustrated in cut-away.

In this embodiment, the beam expander 221 is somewhat similar to a beam expanding, on-axis telescope. In this non-exclusive embodiment, the beam expander 221 includes a disk shaped, convex collimating diverging element 227, and an annular disk shaped, concave collimating element 228. In one embodiment, the elements 227, 228 and the fourth pointer element 276 are spaced apart from each other, and centered on an element axis 288 that is coaxial with the output axis 212A. Further, in this embodiment, the fourth pointer element 276 directs and steers the combination beam 226 at the diverging element 227.

The diverging element 227 expands and/or diverges the laser beams of the combination beam 226. Subsequently, the collimating element 228 re-collimates each of the laser beams of the combination beam 226 to generate the assembly beam 212. Stated in another manner, the collimating element 228 collimates the laser beams of the combination beam 226 that have exited from the diverging element 227.

Together, the expander elements 227, 228 are a beam expander, expanding the combination beam 226 to the larger collimated assembly beam 212. In certain non-exclusive alternative embodiments, the beam expander 221 can be designed to increase the diameter (combination beam 226 compared to the assembly beam 212) by a factor of at least one and a half, two, three, four, five or six, and reduce divergence accordingly. With this design, by using a single beam expander 221, i.e. a single telescope, beam divergence is minimized, and power output can be efficiently scaled by combining laser beams 224A-224F (illustrated in Figure 2D).

In Figure 2F, each element 227, 228 is a reflective element, and can include a coating that efficiently reflects light at the wavelength of the assembly beam 212. Because, reflective elements 227, 228 are utilized, the device 210 can be used with a higher power assembly beam 212 without being excessively heated and distorted.

The diverging element 227 can be convex disk shaped and have an outer diameter 227A. Further, the diverging element 27 can be divided into a disk shaped center region 27B located on the element axis 54, and an annular disk shaped outer region 27C that encircles the center region 288. Moreover, the collimating element 228 can be concave, annular disk shaped to define an element aperture 228A, and can have an inner diameter 28B and an outer diameter 228C. Alternatively, the collimating element 228 can be designed without the element aperture 228A.

In Figure 2F, the combination beam 226 is directed by the fourth pointer element 276 at the diverging element 227. Further, with this beam expander 221 design, any light directed along the element axis 288 that strikes the outer region 227C of the diverging element 227 will be reflected to the collimating element 228, while any light directed along the element axis 288 that strikes the center region 227B of the diverging element 227 will be reflected back and miss the collimating element 228.

As provided above, the combination beam 226 is uniquely designed to be annular shaped and have a hollow center. With this design, the rays from the combination beam 226 are only incident on the outer region 227C and not the inner region 227B of the diverging element 227. As a result thereof, the entire combination beam 226 is reflected back to the collimating element 228, and the overall power of the laser beams 24A-24F forms the assembly beam 212. In summary, the present invention takes advantage of flexibility in the coherently combined laser beams 24A-24F to use it with on-axis telescope 221 without: (i) loss in power, (ii) degradation of quality of the assembly beam 212, or (iii) excessive heating of the device 10. Stated in another fashion, the hollow combination beam 226 can be used with no performance loss with an on-axis telescope 221, with less size, weight, power consumption and cost than an off-axis telescope.

For example, with reference to Figures 2D and 2F, the laser beams 224A-224F of the combination beam 226 can be arranged so that the outer diameter 226C of the combination beam 226 is less than or equal to the outer diameter 227A of the diverging element 227 so it is reflected to the collimating element 228.

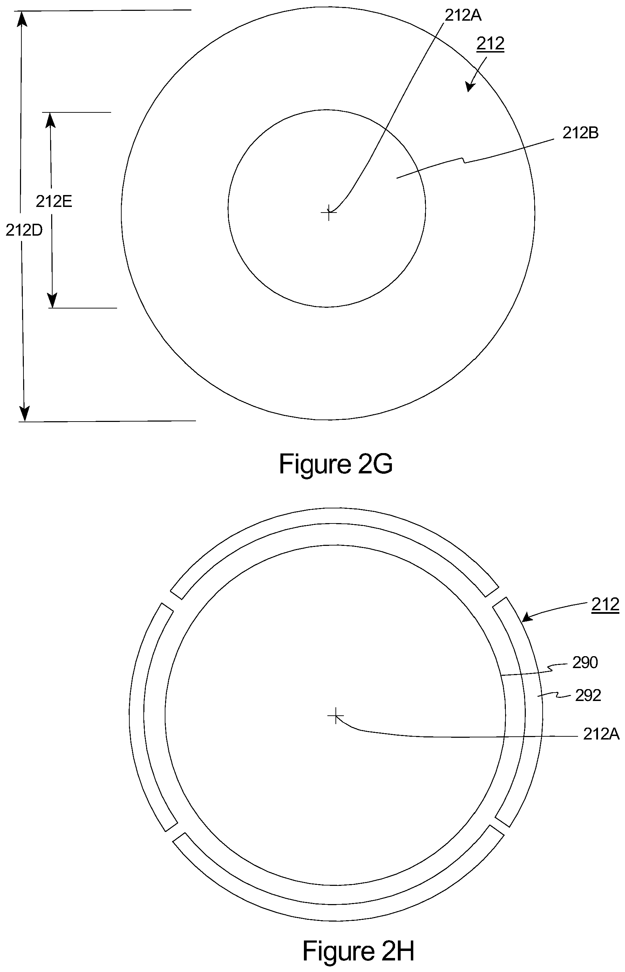

Figure 2G illustrates the assembly beam 212 in the near field, after the light has exited from the beam expander 221 (illustrated in Figure 2F) along the output axis 212A. Stated in another fashion, Figure 2G illustrates a clear aperture of the beam expander 221 with the central area obscured by the diverging element 227 (illustrated in Figure 2G).

At this time, the assembly beam 212 has a substantially annular shaped cross-section in the near field and has a hollow center 212B. In this embodiment, assembly beam 212 has a substantially circular outer diameter 212D and a substantially circular inner diameter 212E. It should be noted that the beam combiner 218 (illustrated in Figure 2A) can be designed so that the annular shape of the assembly beam 212 is circular tube shaped. Alternatively, the beam combiner 218 can be designed so that the annular shape of the assembly beam 212 is rectangular tube shaped. Still alternatively, the beam combiner 218 can be designed so that the annular shape of the assembly beam 212 has another configuration, e.g., an octagon or other polygon shape.

As used herein, "substantially annular" shall mean that at least seventy-five percent of an annular shaped is filled with light. Further, as used herein, "substantially circular outer diameter" shall mean that a circle can be made that tightly surrounds and encircles the light that exits the beam expander 221. Moreover, as used herein, "substantially circular inner diameter" shall mean that a circle can be made that is tightly surrounded and encircled by the light that exits the beam expander 221.

It should be noted that size of the assembly beam 212 will depend upon the design of the combination beam 226 and the design of the beam expander 221. In alternative, non-exclusive examples, the device 210 can be designed so that the assembly beam 212 has (i) an outer diameter 212B of between six and twenty-four inches, and (ii) an inner diameter 212C of between one and six inches.

Figure 2H illustrates the assembly beam 212 in the far field along the output axis 212A. At this time, the assembly beam 212 has a disk shaped cross-section, and nolonger has a hollow center (similar to a solid beam). In Figure 2H, the inner circle represents a diffraction limited beam size 290 of the assembly beam 212, while the outer arcs 292 represent the fraction of energy outside of diffraction limited beam.

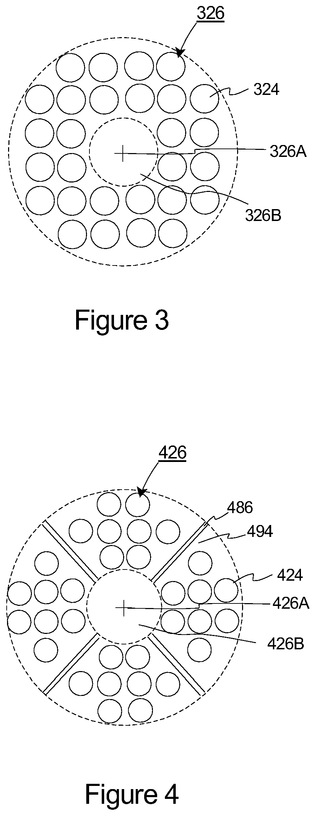

Figure 3 is a simplified end illustration of another implementation of the combination beam 326 in the near field, generated by a different embodiment of the laser (not shown in Figure 3). In this embodiment, the combination beam 326 is directed along the combination axis 326A, and is made up of twenty-eight separate, laser beams 324 (illustrated with solid circles) that are directed to propagate parallel to each other. Again, in this embodiment, the laser beams 324 are arranged so that the combination beam 326 has a substantially annular shaped cross-section (illustrated with dashed lines) in the near field and has a hollow center 326B.

Figure 4 is a simplified end illustration of another, non-exclusive implementation of the combination beam 426 in the near field, generated by a different embodiment of the laser (not shown in Figure 4). In this embodiment, the combination beam 426 is directed along the combination axis 426A, and is made up of forty separate, laser beams 424 (illustrated with solid circles) that are directed to propagate parallel to each other. Again, in this embodiment, the laser beams 424 are arranged so that the combination beam 426 has a substantially annular shaped cross-section (illustrated with dashed lines) in the near field and has a hollow center 426B.

It should be noted that Figure 4 also illustrates a non-exclusive example, of four rigid, spaced apart, structural frames 486 that extend radially. As discussed above, the rigid structural frames 486 can be used to attach the elements 227, 228 (illustrated in Figure 2A) together. With the present invention, the laser can be designed so that the laser beams 424 are arranged to avoid the rigid structural frames 486 that would otherwise block the beams 424. Thus, as provided herein, the laser beams 424 can be arranged in any annular format that would avoid structures 486 that would otherwise block the light and waste light. Thus, the laser beams 424 can be arranged in any fashion to have one or more gaps 494 (or slots in the near field) so that the combination beam 426 avoids the one or more structural frames 486 so that the structural frames 486 do no obstruct the combination beam 426.

While the particular devices 10, 210 as shown and disclosed herein are fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A device (10) comprising:
a laser (14) including an optical amplifier array system (17) that generates a plurality of laser beams (24), wherein the laser beams have a same wavelength and have approximately a same phase; and a beam combiner (18) that coherently combines the plurality of laser beams to form a combination beam (26) having a hollow center; and
an on-axis beam expander (21) that adjusts the combination beam to provide an assembly beam (12) that has a hollow center in the near field and characteristics of a solid beam in a far field.

2. The device of claim 1 wherein the optical amplifier array system generates at least six laser beams which have the same wavelength and approximately the same phase.

3. The device of claim 2 wherein at least six of laser beams in the combination beam propagate along parallel axes and are positioned side-by-side.

4. The device of claim 1 wherein the on-axis beam expander includes a plurality of reflective elements (270, 272, 274, 276) that expand the combination beam.

5. The device of claim 1 wherein the on-axis beam expander includes a diverging element (227) and a collimating element (228).

6. The device of claim 5 wherein the diverging element diverges the plurality of laser beams of the combination beam; and wherein the collimating element subsequently re-collimates each of the plurality of laser beams of the combination beam to generate the assembly beam.

7. The device of claim 5 further comprising a structural frame (286) that is configured to couple the diverging element to the collimating element; and wherein the combination beam has a gap (494) to allow the combination beam to not be obstructed by the structural frame.

8. The device of claim 1 wherein the plurality of laser beams are arranged such that there are one or more gaps in the combination beam.

9. The device of claim 1 wherein the optical amplifier array system includes a seed laser (230) that generates a seed output beam (230A), a fiber splitter (232) that splits the seed output beam into a plurality of seed split beams (232A-232F), and an amplifier assembly that amplifies each of the seed split beams to generate the plurality of laser beams.

10. The device of claim 1 wherein the beam combiner directs the plurality of laser beams to be substantially parallel to and spaced apart from a combination axis of the combination beam.

11. The device of claim 1 wherein the beam combiner includes a plurality of combiner fibers (242A-242F) for transmitting and launching the plurality of laser beams, wherein each combiner fiber has a fiber outlet, and wherein the fiber outlets are spaced apart and arranged in an outlet pattern having a hollow center.

12. The device of claim 1 wherein the beam combiner coherently combines the plurality of laser beams so that the combination beam has a substantially annular shaped cross-section with a substantially circular outer diameter and a substantially circular inner diameter.

13. The device of claim 1 further comprising a beam pointer (220) that selectively steers the combination beam.

14. The device of claim 13 wherein the beam pointer includes one or more reflective elements that cooperate to steer the combination beam from the beam combiner to the on-axis beam expander.

15. A method for generating a combination beam, the method comprising:
generating a plurality of laser beams, wherein the laser beams have a same wavelength and have approximately a same phase;
coherently combining the plurality of laser beams to form a combination beam having a hollow center; and
adjusting the combination beam with an on-axis beam expander to provide an assembly beam that has a hollow center in a near field and characteristics of a solid beam in a far field.

## Patentansprüche

1. Vorrichtung (10), aufweisend:
einen Laser (14) mit einem optischen Verstärker-Array-System (17), das eine Vielzahl von Laserstrahlen (24) erzeugt, wobei die Laserstrahlen die gleiche Wellenlänge und ungefähr die gleiche Phase aufweisen; und
einen Strahlkombinierer (18), der die Vielzahl von Laserstrahlen kohärent kombiniert, um einen Kombinationsstrahl (26) mit einem hohlen Zentrum zu bilden; und
einen axialen Strahlaufweiter (21), der den Kombinationsstrahl einstellt, einen Sammelstrahl (12) bereitzustellen, der im Nahfeld ein hohles Zentrum und im Fernfeld die Eigenschaften eines gefüllten Strahls aufweist.

2. Vorrichtung nach Anspruch 1, wobei das optische Verstärker-Array-System mindestens sechs Laserstrahlen erzeugt, die die gleiche Wellenlänge und ungefähr die gleiche Phase aufweisen.

3. Vorrichtung nach Anspruch 2, wobei mindestens sechs der Laserstrahlen im Kombinationsstrahl sich entlang paralleler Achsen ausbreiten und nebeneinander angeordnet sind.

4. Vorrichtung nach Anspruch 1, wobei der axiale Strahlaufweiter eine Vielzahl von reflektierenden Elementen (270, 272, 274, 276) aufweist, die den Kombinationsstrahl aufweiten.

5. Vorrichtung nach Anspruch 1, wobei der axiale Strahlaufweiter ein divergierendes Element (227) und ein kollimierendes Element (228) aufweist.

6. Vorrichtung nach Anspruch 5, wobei das divergierende Element die Vielzahl von Laserstrahlen des Kombinationsstrahls divergiert und wobei das kollimierende Element anschließend jeden der Vielzahl von Laserstrahlen des Kombinationsstrahl erneut kollimiert, um den Sammelstrahl zu erzeugen.

7. Vorrichtung nach Anspruch 5, die ferner einen Strukturrahmen (286) aufweist, der eingerichtet ist, das divergierende Element mit dem kollimierenden Element zu koppeln; und wobei der Kombinationsstrahl einen Spalt (494) aufweist, damit der Kombinationsstrahl nicht durch den Strukturrahmen behindert wird.

8. Vorrichtung nach Anspruch 1, wobei die Vielzahl von Laserstrahlen angeordnet sind, dass ein oder mehrere Spalte im Kombinationsstrahl vorhanden sind.

9. Vorrichtung nach Anspruch 1, wobei das optische Verstärker-Array-System einen Seed-Laser (230) aufweist, der einen Seed-Ausgangsstrahl (230A) erzeugt, einen Fasersplitter (232), der den Seed-Ausgangsstrahl in Vielzahl von Seed-Teilstrahlen (232A-232F) aufteilt, und eine Verstärkeranordnung, die jeden der Seed-Teilstrahlen verstärkt, um die Vielzahl von Laserstrahlen zu erzeugen.

10. Vorrichtung nach Anspruch 1, wobei der Strahlkombinierer die Vielzahl von Laserstrahlen so lenkt, dass sie im Wesentlichen parallel zu einer Kombinationsachse des Kombinationsstrahls verlaufen und von dieser beabstandet sind.

11. Vorrichtung nach Anspruch 1, wobei der Strahlkombinierer eine Vielzahl von Kombinationsfasern (242A-242F) zum Übertragen und Auskoppeln der Vielzahl von Laserstrahlen aufweist, wobei jede Kombinationsfaser einen Faserausgang aufweist und wobei die Faserausgänge voneinander beabstandet und in einem Ausgang-Muster mit einem hohlen Zentrum angeordnet sind.

12. Vorrichtung nach Anspruch 1, wobei der Strahlkombinierer die Vielzahl von Laserstrahlen kohärent kombiniert, so dass der Kombinationsstrahl einen im Wesentlichen ringförmigen Querschnitt mit einem im Wesentlichen kreisförmigen Außendurchmesser und einem im Wesentlichen kreisförmigen Innendurchmesser aufweist.

13. Vorrichtung nach Anspruch 1, die ferner einen Strahlzeiger (220) aufweist, der den Kombinationsstrahl selektiv lenkt.

14. Vorrichtung nach Anspruch 13, wobei der Strahlzeiger ein oder mehrere reflektierende Elemente aufweist, die zusammenwirken, um den Kombinationsstrahl vom Strahlkombinierer zum axialen Strahlaufweiter zu lenken.

15. Verfahren zum Erzeugen eines Kombinationsstrahls, das Verfahren aufweisend:
Erzeugen einer Vielzahl von Laserstrahlen, wobei die Laserstrahlen dieselbe Wellenlänge und ungefähr dieselbe Phase aufweisen;
kohärentes Kombinieren der Vielzahl von Laserstrahlen, um einen Kombinationsstrahl mit einem hohlen Zentrum zu bilden; und
Einstellen des Kombinationsstrahls mit einem axialen Strahlaufweiter, um einen Sammelstrahl zu erzeugen, der ein hohles Zentrum im Nahfeld und Eigenschaften eines gefüllten Strahls im Fernfeld aufweist.

## Revendications

1. Dispositif (10), comprenant :
un laser (14) comprenant un système de réseau d'amplificateur optique (17) qui génère une pluralité de faisceaux laser (24), dans lequel les faisceaux laser ont une même longueur d'onde et ont approximativement une même phase ; et un combineur de faisceaux (18) qui combine de manière cohérente la pluralité de faisceaux laser pour former un faisceau combiné (26) ayant un centre creux ; et
un expanseur de faisceau sur axe (21) qui ajuste le faisceau combiné pour fournir un faisceau assemblé (12) qui a un centre creux dans le champ proche et des caractéristiques d'un faisceau solide dans un champ lointain.

2. Dispositif selon la revendication 1, dans lequel le système de réseau d'amplificateur optique génère au moins six faisceaux laser qui ont la même longueur d'onde et approximativement la même phase.

3. Dispositif selon la revendication 2, dans lequel au moins six parmi des faisceaux laser dans le faisceau combiné se propagent le long d'axes parallèles et sont positionnés côte à côte.

4. Dispositif selon la revendication 1, dans lequel l'expanseur de faisceau sur axe comprend une pluralité d'éléments réfléchissants (270, 272, 274, 276) qui expansent le faisceau combiné.

5. Dispositif selon la revendication 1, dans lequel l'expanseur de faisceau sur axe comprend un élément divergent (227) et un élément collimateur (228).

6. Dispositif selon la revendication 5, dans lequel l'élément divergent fait diverger la pluralité de faisceaux laser du faisceau combiné ; et dans lequel l'élément collimateur recollimate ensuite chacun de la pluralité de faisceaux laser du faisceau combiné pour générer le faisceau assemblé.

7. Dispositif selon la revendication 5, comprenant en outre un cadre structurel (286) qui est configuré pour coupler l'élément divergent à l'élément collimateur ; et dans lequel le faisceau combiné comporte un espace (494) pour permettre au faisceau combiné de ne pas être obstrué par le cadre structurel.

8. Dispositif selon la revendication 1, dans lequel la pluralité de faisceaux laser sont agencés de telle sorte qu'il y ait un ou plusieurs espaces dans le faisceau combiné.

9. Dispositif selon la revendication 1, dans lequel le système de réseau d'amplificateur optique comprend un laser d'amorçage (230) qui génère un faisceau de sortie d'amorçage (230A), un séparateur de fibre (232) qui sépare le faisceau de sortie d'amorçage en une pluralité de faisceaux séparés d'amorçage (232A-232F), et un ensemble amplificateur qui amplifie chacun des faisceaux séparés d'amorçage pour générer la pluralité de faisceaux laser.

10. Dispositif selon la revendication 1, dans lequel le combineur de faisceaux dirige la pluralité de faisceaux laser de manière à ce qu'ils soient sensiblement parallèles et espacés d'un axe de combinaison du faisceau combiné.

11. Dispositif selon la revendication 1, dans lequel le combineur de faisceaux comprend une pluralité de fibres de combineur (242A-242F) pour transmettre et lancer la pluralité de faisceaux laser, dans lequel chaque fibre de combineur comporte une sortie de fibre, et dans lequel les sorties de fibre sont espacées et agencées selon un motif de sortie ayant un centre creux.

12. Dispositif selon la revendication 1, dans lequel le combineur de faisceaux combine de manière cohérente la pluralité de faisceaux laser de sorte que le faisceau combiné présente une section transversale sensiblement annulaire avec un diamètre extérieur sensiblement circulaire et un diamètre intérieur sensiblement circulaire.

13. Dispositif selon la revendication 1, comprenant en outre un pointeur de faisceau (220) qui dirige de manière sélective le faisceau combiné.

14. Dispositif selon la revendication 13, dans lequel le pointeur de faisceau comprend un ou plusieurs éléments réfléchissants qui coopèrent pour diriger le faisceau combiné depuis le combineur de faisceaux vers l'expanseur de faisceau sur axe.

15. Procédé pour générer un faisceau combiné, le procédé comprenant :
la génération d'une pluralité de faisceaux laser, dans lequel les faisceaux laser ont une même longueur d'onde et ont approximativement une même phase ;
la combinaison cohérente de la pluralité de faisceaux laser pour former un faisceau combiné ayant un centre creux ; et
l'ajustement du faisceau combiné avec un expanseur de faisceau sur axe pour fournir un faisceau assemblé qui a un centre creux dans un champ proche et des caractéristiques d'un faisceau solide dans un champ lointain.
